# EUROPÄISCHE PATENTSCHRIFT

(11) **EP 3 123 062 B1**
(45) Veröffentlichungstag und Bekanntmachung des Hinweises auf die Patenterteilung: **03.06.2020**
(21) Anmeldenummer: 15713836.3
(22) Anmeldetag: 24.02.2015
(51) Int. Cl.: F16H 61/32

(54) **1-MOTOR-GETRIEBEAKTOR MIT KULISSE ZUM WÄHLEN UND SCHALTEN VON GÄNGEN EINER KRAFTFAHRZEUGGETRIEBEEINRICHTUNG**
SINGLE-MOTOR TRANSMISSION ACTUATOR COMPRISING A GATE FOR SELECTING AND SHIFTING GEARS OF A MOTOR VEHICLE TRANSMISSION DEVICE
ACTIONNEUR DE BOÎTE DE VITESSE À 1 MOTEUR AVEC COULISSE POUR LA SÉLECTION ET LE CHANGEMENT DE RAPPORTS D'UN MÉCANISME DE BOÎTE DE VITESSES DE VÉHICULE AUTOMOBILE

(30) Priorität: 26.03.2014 DE 102014205659
(43) Veröffentlichungstag der Anmeldung: 01.02.2017
(73) Patentinhaber: Schaeffler Technologies AG & Co. KG, 91074 Herzogenaurach (DE)
(72) Erfinder: KRETZ-BUSCH, Volker, 77833 Ottersweier (DE); HAAS, Maximilian, 77815 Bühl (DE); MALITOURNE, Jerome, F-67410 Drusenheim (FR)
(86) Internationale Anmeldenummer: PCT/DE2015/200100
(87) Internationale Veröffentlichungsnummer: WO 2015/144153

(56) Entgegenhaltungen:
- DE-A1- 19 904 022
- DE-A1-102004 039 068
- DE-A1-102006 054 906
- JP-A- 2006 029 507

## Beschreibung

Die vorliegende Erfindung betrifft einen 1-Motor-Getriebeaktor für eine Kraftfahrzeuggetriebeeinrichtung, die für die Bildung von Gängen mehrere Übersetzungsstufen aufweist.

Unter einem erfindungsgemäßen Getriebeaktor ist insbesondere ein Getriebeaktor zu verstehen, welcher betätigend innerhalb eines Kraftfahrzeugs auf wenigstens eine der folgenden Einrichtungen einwirkt: Fahrzeuggetriebe, Kupplung und Bremse betätigend, wählend und/oder schaltend.

Bekanntermaßen können die Gänge von Kraftfahrzeuggetrieben, wie bspw. automatisierten Schaltgetrieben (ASG), Parallelschaltgetrieben (PSG) beziehungsweise Doppelkupplungsgetrieben (DKG) oder anderen ähnlichen Getrieben mittels eines Getriebeaktors ein- und ausgelegt werden, der dabei eine sogenannte äußere Getriebeschaltung bildet.

Beispielsweise ist aus der DE 10 2004 038 955 A1 bekannt, genau einen Elektromotor in einem Getriebeaktor eines Kraftfahrzeugs zu verwenden, um sowohl die Wählbewegungen als auch die Schaltbewegungen im Getriebe durchzuführen. Ein entsprechender Getriebeaktor wird daher auch als 1-Motor-Getriebeaktor bezeichnet.

Ferner ist es aus der DE 10 2006 054 901 A1 der Anmelderin bekannt, diesen 1-Motor-Getriebeaktor so aufzubauen, dass eine Drehung eines Elektromotors (als Antriebseinheit für den Getriebeaktor) in eine Richtung eine Schaltbewegung, und eine entsprechende Bewegung des Elektromotors in die andere Richtung eine Wählbewegung der Schaltwelle des Getriebes bewirkt. Zum Schalten von einer Schaltbewegung und einer Wählbewegung weist der Getriebeaktor eine Verbindungseinrichtung auf, welche eine Spindelmutter mit entsprechenden Zahnstangen beziehungsweise Zahnrädern zum Bewirken einer Schalt- beziehungsweise Wählbewegung der Schaltwelle koppelt.

Ebenso ist aus der DE 10 2006 054 906 A1 bereits ein 1-Motor-Getriebeaktor bekannt.

Weiter ist aus der DE 10 2006 017 158 A1 eine Kulisse bekannt, die ein fest angeordnetes erstes Kulissenteil mit einer zylindrischen Mantelfläche und daran angeordneten axial beabstandeten Ringnuten aufweist. Die Kulisse umfasst weiter ein axial beweglich und dreh- beziehungsweise schwenkbeweglich angeordnetes zweites Kulissenteil, das axialfest und drehfest mit der Schaltwelle verbunden ist. Das zweite Kulissenteil ist in Abhängigkeit seiner Axialstellung jeweils in die axial beabstandeten Nuten des ersten Kulissenteils einschwenkbar. Die Kulisse ist also eine Führungseinrichtung, die die Verstellbarkeit des Getriebeaktors, also die Verstellbarkeit der Schaltwelle des Getriebeaktors, im Wesentlichen auf eine Verstellbarkeit entsprechend einer Schaltgassen/ Wählgassenanordnung beschränkt. Das heißt die Kulisse bewirkt, dass die Verdrehbarkeit der Schaltwelle von der Axialstellung dieser Schaltwelle abhängt und/oder, dass die Axialbeweglichkeit der Schaltwelle von der Schwenk- beziehungsweise Verdrehstellung der Schaltwelle abhängt. Bei dieser Kulisse sind an den zwischen den Ringnuten angeordneten Stegen beidseitig jeder Nut Fasen vorgesehen, so dass ein Verschwenken des zweiten Kulissenteils in das erste Kulissenteil erleichtert wird.

Aus der JP 2006 029507 A ist eine Schaltwelle eines Handschaltergetriebes mit einer Kulisse bekannt, die eine Schaltbewegung unterbindet, wenn die Schaltwelle im Zustand der Gangwahl ist. Hierbei weisen alle Kulissenteile auch Fasen auf.

Bei einem 1-Motor-Getriebeaktor kann diese beidseitige Fase jedoch dazu führen, dass die Verbindungseinrichtung insgesamt verspannt wird, so dass die Funktion des Getriebeaktors beeinträchtigt werden kann.

Hinsichtlich des Aufbaus eines 1-Motor-Getriebeaktors für eine Kraftfahrzeuggetriebeeinrichtung wird insbesondere auf die noch nicht veröffentlichte DE 10 2013 207 871 der Anmeldering verwiesen, die hiermit vollumfänglich in Bezug genommen wird.

Aufgabe der vorliegenden Erfindung ist es, einen 1-Motor-Getriebeaktor vorzuschlagen, dessen Schalt- und Wählbewegungen durch eine Kulisse genau gesteuert werden können, so dass eine Fehlbetätigung des Getriebes verhindert wird und ein Verspannen der Verbindungseinrichtung des Getriebeaktors vermieden wird. Diese Aufgabe wird durch die Merkmale des unabhängigen Patentanspruchs 1 gelöst. Vorteilhafte Weiterbildungen sind Gegenstand der abhängigen Patentansprüche.

Die Erfindung betrifft einen Getriebeaktor für eine Kraftfahrzeuggetriebeeinrichtung, insbesondere einen 1-Motor-Getriebeaktor, wobei die Kraftfahrzeuggetriebeeinrichtung für die Bildung von Gängen mehrere Übersetzungsstufen aufweist. Der Getriebeaktor weist eine Schaltwelle auf, die für das Schalten von Gängen drehbeweglich gelagert ist und für das Wählen von Gängen axial verschiebbar gelagert ist. Der Getriebeaktor weist eine Kulisse auf mit einem fest angeordneten ersten Kulissenteil und einem axial verschiebbaren und drehbeweglichen zweiten Kulissenteil, wobei das eine Kulissenteil entlang einer Richtung abwechselnd Nuten und Stege aufweist und das andere Kulissenteil wenigstens ein Element aufweist, das mit jeweils einem der Stege zusammenwirken kann und in jeweils in einer der Nuten bewegbar ist. Das wenigstens eine Element wird bei einer Wählbewegung in einer festgelegten Richtung an den Stegen und Nuten (also insbesondere senkrecht zum Verlauf der Nuten und Stege) vorbeigeführt und bei einer Schaltbewegung in eine der Nuten hineinbewegt (also parallel zum Verlauf der Nuten und Stege). Zumindest an den Stegen oder an dem Element ist eine Einführfase vorgesehen, so dass das zweite Kulissenteil bei einer Kollision zwischen Element und Steg während der Schaltbewegung über die Einführfase in der festgelegten Richtung der Wählbewegung weiterbewegbar und die Schaltbewegung fortsetzbar ist; wobei im Übrigen im Wesentlichen rechtwinklige Übergänge vorgesehen sind, so dass dann bei der Kollision zwischen Element und Steg während der Schaltbewegung das zweite Kulissenteil nicht entgegen der festgelegten Richtung der Wählbewegung bewegbar ist, sondern die Schaltbewegung gestoppt ist.

Der hier vorgeschlagene Getriebeaktor mit Kulisse ist insbesondere geeignet als 1-Motor-Getriebeaktor, wie er aus der bisher nicht veröffentlichten DE 10 2013 207 871 bekannt ist. Dieses Dokument wird hiermit vollumfänglich in Bezug genommen. Der dort beschriebene 1-Motor-Getriebeaktor ist durch die hier beschriebene Kulisse zu ergänzen.

Darüber hinaus ist die vorliegende Erfindung jedoch auch für andere Getriebeaktoren einsetzbar. Bei der angegebenen DE 10 2013 207 871 erzeugt der eine Motor zwei Drehrichtungen, die in eine Drehbewegung (Schaltbewegung) und eine Hubbewegung (Wählbewegung) der Schaltwelle über die Verbindungseinrichtung umgesetzt werden. Zur Führung dieser Wählbewegung (Hubbewegung) und Schaltbewegung (Drehbewegung) der Schaltwelle ist eine Kulisse vorgesehen, die sicherstellt, dass der an der Schaltwelle angeordnete und der das Getriebe des Kraftfahrzeugs betätigende Schaltfinger in der richtigen Stellung gegenüber dem Getriebe angeordnet ist.

Bei diesem 1-Motor-Getriebeaktor ist ein sogenannter Freilauf in der Verbindungseinrichtung vorgesehen, der eine Drehung in eine Richtung ermöglicht und bei einer Drehung in der anderen Richtung diese Drehbewegung sperrt (Sperrrichtung).

Um eine Bewegung der Schaltwelle entgegen dieser Sperrrichtung zu verhindern, ist nun vorgesehen, dass eine Einführfase so angeordnet ist, dass bei einer Kollision zwischen Element und Steg während der Schaltbewegung das zweite Kulissenteil in der festgelegten Richtung der Wählbewegung weiterbewegbar ist und die Schaltbewegung fortsetzbar ist, wobei im Übrigen bei einer Kollision zwischen Element und Steg während der Schaltbewegung das zweite Kulissenteil in keinem Fall entgegen der festgelegten Richtung der Wählbewegung bewegbar ist, sondern die Schaltbewegung gestoppt ist. Gerade in diesem Fall, also wenn ein Freilauf in der Verbindungseinrichtung vorgesehen ist, wird es zu einem Verspannen der Verbindungseinrichtung kommen und die Funktion des Getriebeaktors auch nachhaltig beeinträchtigt werden.

Das Element weist ferner eine in eine festgelegte Richtung weisende erste Wandung und eine hin zu der Nut weisende Stirnseite auf, wobei zwischen Stirnseite und erster Wandung die Einführfase vorliegt. Weiter weist das Element eine der festgelegten Richtung entgegen weisende zweite Wandung auf, wobei zwischen der Stirnseite und der zweiten Wandung ein im Wesentlichen rechtwinkliger Übergang (90 Winkelgrad) vorliegt.

Die Einführfase weist also einen Winkel gegenüber der festgelegten Richtung auf, der geringer als 90 Winkelgrad ist, insbesondere zwischen 50 und 70 Winkelgrad. Dabei weist die Einführfase in Richtung der Schaltbewegung eine Länge auf, so dass das zweite Kulissenteil über die Länge der Einführfase um eine Strecke in der festgelegten Richtung weiterverschiebbar ist.

Gemäß einer bevorzugten Ausgestaltung weist das zweite Kulissenteil die Nuten und Stege auf.

Insbesondere ist das zweite Kulissenteil an der Schaltwelle fest angeordnet und mit der Schaltwelle gegenüber dem fest angeordneten ersten Kulissenteil bewegbar. Das heißt insbesondere, dass das zweite Kulissenteil fest mit der Schaltwelle verbunden ist und nur mit dieser gemeinsam bewegbar ist, wobei das erste Kulissenteil gehäusefest angeordnet ist, so dass die Schaltwelle gegenüber diesem ersten Kulissenteil bewegt wird.

Gemäß einer weiteren besonders bevorzugten Ausgestaltung weist das zweite Kulissenteil die Nuten und Stege auf und ist koaxial zu der Schaltwelle angeordnet und erstreckt sich um die Schaltwelle herum, wobei sich die Nuten und Stege in einer Umfangsrichtung erstrecken und das zweite Kulissenteil weiter mindestens eine Gasse aufweist, in der das wenigstens eine Element des ersten Kulissenteils während der Wählbewegung bewegbar ist.

Insbesondere weist das zweite Kulissenteil auf beiden Seiten der mindestens einen Gasse Nuten und Stege auf und die Schaltbewegung erfolgt bei einer Wählbewegung in einer ersten Richtung nur in eine erste Umfangsrichtung und bei einer Wählbewegung in einer der ersten Richtung entgegengesetzten zweiten Richtung nur in eine zweite Umfangsrichtung, wobei das wenigstens eine Element entsprechend zwei Stirnseiten aufweist. Dabei wirkt jeweils eine Stirnseite mit jeweils den Nuten und Stegen auf jeweils einer Seite der Gasse zusammen.

Insbesondere wird die (erste, zweite) Richtung als festgelegte Richtung bezeichnet, in der die Wählbewegung erfolgt. Ausgehend von dieser festgelegten Richtung der Wählbewegung ist eine Drehung nur in eine Umfangsrichtung möglich (z. B.: Wählbewegung nach oben, Schaltbewegung nach links; Wählbewegung nach unten, Schaltbewegung nach rechts).

Insbesondere ist das zweite Kulissenteil über eine erste Profilverzahnung an einer Innenumfangsfläche mit einer zweiten Profilverzahnung an einer Außenumfangsfläche der Schaltwelle drehfest verbunden, wobei an beiden Profilverzahnungen jeweils ein Kodierzahn vorliegt, der nur eine Einbauposition von zweitem Kulissenteil und Schaltwelle zueinander zulässt. Insbesondere ist ein Zahn (und ein entsprechender Freiraum zwischen den Zähnen der anderen Profilverzahnung zur Aufnahme dieses Zahns) der Profilverzahnung nicht vollständig ausgeformt, so dass sich die erste Profilverzahnung an der Innenumfangsfläche nicht über die zweite Profilverzahnung an der Außenumfangsfläche aufschieben lässt, wenn die Kodierzähne nicht einander gegenüberliegen.

Insbesondere ist eine Markierung an dem zweiten Kulissenteil angeordnet, so dass die Einbauposition erkennbar ist.

Insbesondere ist das erste Kulissenteil ringförmig ausgeführt und koaxial zu der Schaltwelle angeordnet und erstreckt sich um die Schaltwelle und um das zweite Kulissenteil herum.

Gemäß einer weiteren vorteilhaften Weiterbildung weist das erste Kulissenteil zwei einander gegenüberliegende Elemente auf und das zweite Kulissenteil zwei einander gegenüberliegende Gassen. Gegenüberliegend heißt hier, dass das Kulissenteil bei Drehung um 180° symmetrisch ausgeführt ist. Die Gassen und Elemente sind also an gegenüberliegenden Seiten der gemeinsamen Achse der Schaltwelle angeordnet. Eine solche Anordnung von jeweils zwei Elementen, die zeitgleich mit Nuten, Stegen oder Gassen zusammenwirken, erhöht die Stabilität und damit die Verschleißfestigkeit der Kulisse und damit des Getriebeaktors.

Gemäß einer weiteren besonders vorteilhaften Ausgestaltung umfasst der Getriebeaktor eine Spindel mit einer Spindelmutter, wobei die Spindelmutter eine Zahnstange bildet und über jeweils eins von zwei Zahnrädern mit einem Wellenrad wirkverbunden ist, wobei das Wellenrad mit der Schaltwelle fest verbunden ist. Die Spindelmutter bildet dabei selbst das zweite Kulissenteil, wobei Nuten und Stege parallel zu einer Spindelachse verlaufen. Das Element des ersten Kulissenteils ist durch mindestens einen Stift gebildet, der mit den Nuten und Stegen der Spindelmutter zusammenwirken kann.

Für diese Ausführungsform wird insbesondere auf den Aufbau des Getriebeaktors gemäß der DE 10 2013 207 871 verwiesen. Insbesondere wird das zweite Kulissenteil durch die dort vorgesehene Spindelmutter gebildet. Der Stift ist gehäusefest angeordnet und stellt das erste Kulissenteil dar. Der Stift bildet zusammen mit dem zweiten Kulissenteil an der Spindelmutter die Rastvorrichtung beziehungsweise Verrastung der Spindelmutter im ersten axialen Stellungsbereich.

Insbesondere weist das erste Kulissenteil dabei zwei Stifte auf, die parallel zueinander und auf gegenüberliegenden Seiten der Spindelachse angeordnet sind.

Die Anordnung von zwei Stiften beziehungsweise von zwei Elementen gegenüber einander (also auf gegenüberliegenden Seiten einer Spindelachse oder der Achse der Schaltwelle) dient dazu, dass eine stabilere Anordnung von erstem Kulissenteil und zweitem Kulissenteil erreicht wird. Weiter weisen so das erste Kulissenteil und das zweite Kulissenteil keine Vorzugsrichtung oben/unten oder 0°/180° auf, so dass die Montage sicherer erfolgen kann.

Die vorliegende Erfindung ist weiter auf ein Verfahren zum Wählen und Schalten von Gängen mit einem Getriebeaktor gerichtet, insbesondere mit einem erfindungsgemäßen Getriebeaktor, wobei eine Steuerung vorgesehen ist und das Verfahren die folgenden Schritte umfasst:
a) Durchführen einer Schaltbewegung und Anordnen des mindestens einen Elements in einer Nut;
b) Durchführen einer Wählbewegung, so dass Element und Steg einander kontaktieren;
c) Bestimmen einer Ist-Position des Stegs und/oder des Elements in Richtung der Wählbewegung;
d) Abgleichen einer Soll-Position und der Ist-Position in der Steuerung und Bestimmung eines Verschleißes des Getriebeaktors.

Die Funktion der Kulisse ist es, eine Wählbewegung außerhalb der Gasse beziehungsweise außerhalb des Wählbands zu verhindern. Weiterhin wird eine Schaltbewegung in Zwischengassenlage verhindert, das heißt es wird verhindert, dass zwei Gänge gleichzeitig eingelegt werden. Die Kulisse sorgt also dafür, dass genau eine Zielschaltgasse beziehungsweise Schaltnut getroffen wird. Die Einführfase dient unter anderem dazu, die Fertigungstoleranzen der an der Schaltbewegung beteiligten Elemente, wie z.B. den Schaltfinger zu vergrößern, so dass auch größere Fehlstellungen dieser Elemente zueinander kompensiert werden können und so die Anzahl der Fehlversuche bei Schaltvorgängen zu verringern.

Weiterhin dient die Kulisse als Drehmomentstütze beim Zurückfahren aus der Nut in das Wählband (z. B. die Gasse). Ohne die Kulisse ist auf diesem Rückweg nicht definiert, ob der Getriebeaktor eine Bewegung in Wähl- oder Schaltrichtung ausführen soll. Durch die Kulisse wird sichergestellt, dass eine Wählbewegung nur dann möglich ist, wenn das Element in der Gasse angeordnet und entlang der Gasse bewegbar ist. Nur dann ist der Schalthebel in der Kraftfahrzeuggetriebeeinrichtung so bewegbar, dass die Schaltschienen zum Einlegen eines Gangs nicht betätigt werden.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden. Insbesondere sind die Ausführungen zum Getriebeaktor auf das Verfahren übertragbar und umgekehrt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: einen 1-Motor-Getriebeaktor aus dem Stand der Technik gemäß DE 10 2013 207 871;
- Fig. 2:: ein Detail der Fig. 1 in einer um 90° gedrehten Ansicht;
- Fig. 3:: ein H-Schaltbild zur Abstraktion der Schaltbewegung;
- Fig. 4:: eine Schaltwelle mit Kulisse und Schalthebel/Schaltschiene im Schnitt;
- Fig. 5:: die Darstellung aus Fig. 4 mit einer anderen Stellung des Schalthebels;
- Fig. 6:: eine erste Ausführungsvariante eines zweiten Kulissenteils;
- Fig. 7:: das Zusammenwirken eines ersten Kulissenteils und eines zweiten Kulissenteils als Kulisse;
- Fig. 8:: Gassen und Nuten eines zweiten Kulissenteils mit darin angeordneten Elementen eines ersten Kulissenteils;
- Fig. 9:: die Darstellung gemäß Fig. 8 in einer anderen Stellung;
- Fig. 10:: die Darstellung gemäß Fig. 8 mit dem Ablauf einer Wählbewegung und Schaltbewegung;
- Fig. 11:: die Darstellung gemäß Fig. 8, wobei hier eine fehlerhafte Schaltbewegung gestoppt wird;
- Fig. 12:: ein Detail eines ersten Kulissenteils gemäß Fig. 7;
- Fig. 13:: einen 1-Motor-Getriebeaktor in einer Seitendarstellung im Schnitt;
- Fig. 14:: ein Detail eines 1-Motor-Getriebeaktors in einer perspektivischen Darstellung mit einer zweiten Ausführungsvariante einer Kulisse;
- Fig. 15:: ein Detail des 1-Motor-Getriebeaktors gemäß Fig. 14.

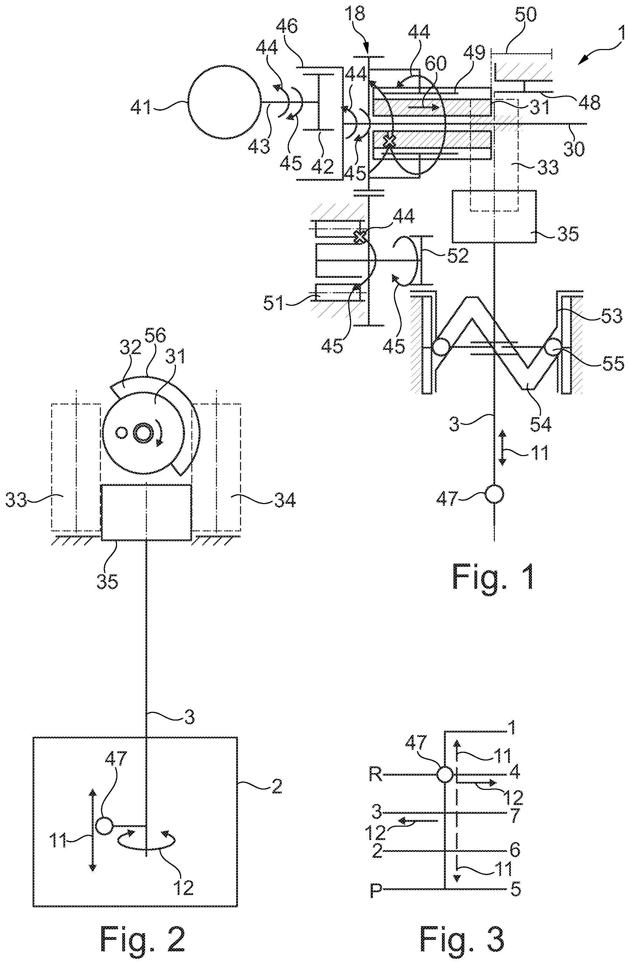

Fig. 1 zeigt einen 1-Motor-Getriebeaktor aus dem Stand der Technik gemäß DE 10 2013 207 871. Mit einem Motor 41 wird eine Stirnradverzahnung 42 über eine entsprechende Motorspindel 43 angetrieben, wobei beide Drehrichtungen 44, 45 möglich sind. Die Stirnradverzahnung 42 greift dabei in eine Hohlradinnenverzahnung 46 ein, welche hier direkt eine Spindel 30 (eine Gewindespindel) antreibt. Je nach Drehrichtung der Motorspindel 43 des Motors 41 führt auch die Spindel 30 eine rotative Bewegung in einer ersten Drehrichtung 44 oder einer entgegengesetzten zweiten Drehrichtung 45 aus.

Auf der (Gewinde-)Spindel 30 ist eine Spindelmutter 31 angeordnet. Die Spindelmutter 31 ist über eine Verzahnung 56 (siehe Fig. 2) mit jeweils einem von zwei Zahnrädern 33, 34 im Eingriff, die selber über ein Wellenrad 35 mit einer Schaltwelle 3 wirkverbunden sind. Eine axiale Verstellung der Spindelmutter 31 bewirkt eine Drehung eines der zwei Zahnräder 33, 34. Diese Drehung bewirkt eine Drehung des Wellenrades 35 und entsprechend eine Verschwenkung eines Schalthebels 47, der an der Schaltwelle 3 angeordnet ist. Die Schalthebel 47 wirkt mit einer Kraftfahrzeug-Getriebeeinrichtung 2 zusammen, die für die Bildung von Gängen mehrere Übersetzungsstufen aufweist. Der Schalthebel 47 führt mit der Schwenkbewegung eine Schaltbewegung 12 aus.

Wird die Spindelmutter 31 entlang der Spindel 30 bewegt, vergrößert sich der Eingriff mit einem dritten Zahnrad 49, d.h. es werden Überdeckungsbereiche hinzugewonnen. Es wäre auch möglich, dass es erst durch diese Bewegung zu einem Eingriff kommt. Solange die Spindelmutter 31 dabei in einem ersten axialen Stellungsbereich 50 der Gewindespindel 30 und im Eingriff mit einer Rastierung 48 ist, kann sich die Spindelmutter 31 entgegen der Rastierkraft der Rastierung 48 nicht axial verschieben. Eine Drehung der Schaltwelle 3, d.h. ein Schaltvorgang wird erst dann möglich, wenn die Spindelmutter 31 soweit aus diesem ersten axialen Stellungsbereich 50 heraus und entlang der Spindel 30 in einen anderen axialen Bereich hineinbewegt wurde, bis die Rastierkraft zwischen Spindelmutter 31 und der Rastierung 48 überwunden wurde. Über das dritte Zahnrad 49 ist die Spindelmutter 31 nun mit dem Freilauf 51 verbunden. Der Freilauf 51 erlaubt eine rotative Bewegung nur in einer zweiten Drehrichtung 45, so dass die Spindelmutter 31 eine rotative Bewegung ausschließlich in einer ersten Drehrichtung 44 ausführen kann. Auf der Drehachse des Freilaufs 51 ist auch ein Wählrad 52 angeordnet, über das die Drehung der Spindelmutter 31 beziehungsweise der Motorspindel 43 an einen Wähltopf 53 übertragen wird. Auch der Wähltopf 53 kann entsprechend ausschließlich in einer Drehrichtung angetrieben werden und transformiert mit Hilfe einer auf seinem Umfang angeordneten Bahnkurve 54 die Drehbewegung in eine Auf- und Abbewegung von Führungsstiften 55, die in die Bahnkurve 54 eingreifen und mit der Schaltwelle 3 verbunden sind. Die Auf- und Abbewegung der Führungsstifte 55 entspricht damit einer Wählbewegung 11 des Schalthebels 3. Diese Wählbewegung 11 wird so lange ausgeführt, wie sich der Motor 41 in der ersten Drehrichtung 44 bewegt. Dreht der Motor 41 seine Drehrichtung stoppt die Wählbewegung 11 aufgrund des Freilaufs 51. Allerdings dreht nun die Spindel 30 und die feststehende Spindelmutter 31 wandert entlang der Spindel 30 zurück in den ersten axialen Stellungsbereich 50, in dem eine weitere axiale Bewegung durch die Rastierung 48 erneut gehemmt wird. Bei dieser axialen Bewegung 60 der Spindelmutter 31 ist die Spindelmutter 6 über die Verzahnung 56 erneut im Eingriff mit jeweils einem von zwei Zahnrädern 33, 34, die mit der Schaltwelle 3 wirkverbunden sind. Über die axiale Bewegung der Spindelmutter 31 wird damit die Schaltbewegung 12 ausgeführt.

Die Beschreibung der DE 10 2013 207 871 wird vollumfänglich in Bezug genommen.

Die Zahnradpaarungen, die die Bewegung des Motors 41 auf die Spindel 30, auf den Freilauf 51, auf den Wähltopf 53 sowie auf das Wellenrad 35 übertragen und damit die Wählbewegung 11 und die Schaltbewegung 12 der Schaltwelle 3 bewirken, werden als Verbindungseinrichtung 18 bezeichnet.

Fig. 2 zeigt ein Detail der Fig. 1 in einer um 90° gedrehten Darstellung, wobei hier die Spindelmutter 31 über die Verzahnung 56 mit dem zweiten Zahnrad 34 im Eingriff steht, so dass ein axiale Bewegung 60 (siehe Fig. 1) eine Drehung des zweiten Zahnrads 34 und damit eine Drehung des Wellenrads 35 und damit eine Schaltbewegung 12 der Schaltwelle 3 hervorruft. Der an der Schaltwelle 3 angeordnete Schalthebel 47 führt bei Drehung der Schaltwelle 3 eine Schaltbewegung 12 aus, durch die eine Kraftfahrzeuggetriebeeinrichtung 2 betätigt wird und entsprechend ein Gang geschaltet wird.

Fig. 3 zeigt ein H-Schaltbild zur Abstraktion der Wählbewegung 11 und der Schaltbewegung 12. Hier ist der Schalthebel 47 vor dem Rückwärtsgang beziehungsweise dem vierten Gang angeordnet und kann bei einer entsprechenden Wählbewegung 11 eine Schaltbewegung 12 ausführen.

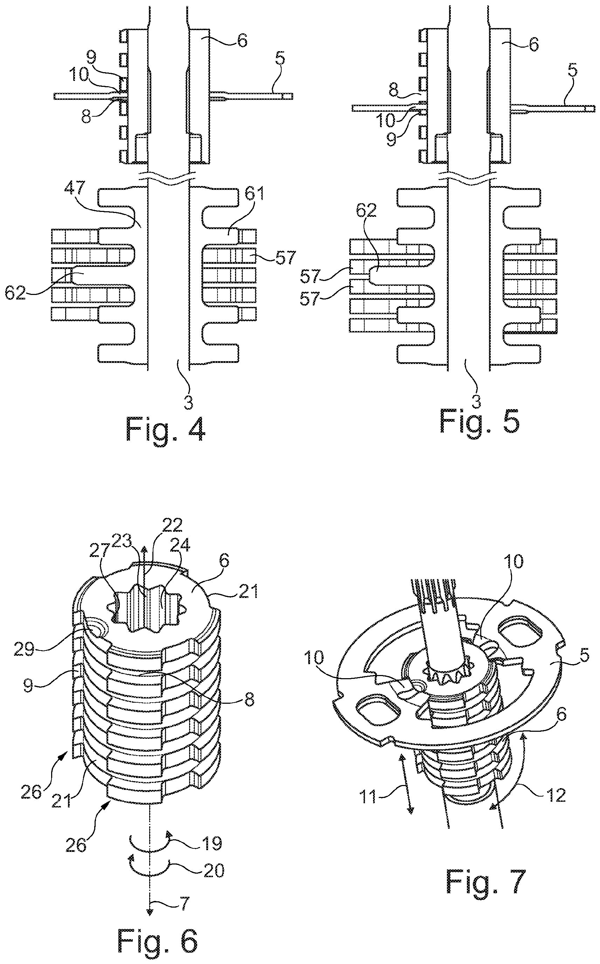

Fig. 4 zeigt eine Schaltwelle 3 mit einer darauf angeordneten Kulisse 4, einem Schalthebel 47 und Schaltschienen 57 einer Kraftfahrzeuggetriebeeinrichtung 2. Der Schalthebel 47 weist einen Schaltfinger 62 und mehrere Auswerfernocken 61 auf. Die Auswerfernocken 61 des Schalthebels 47 sind dabei so ausgebildet, dass sie in der Art eine "Active Interlocks" mit den hier gezeigten Schaltschienen 57 der Kraftfahrzeuggetriebeeinrichtung 2 interagieren können. Zur Wirkung und zum Aufbau solch eines "Active Interlocks" wird hier auf die nicht veröffentlichte DE 10 2013 203 284 der Anmelderin verwiesen, die hiermit vollumfänglich ebenfalls in Bezug genommen wird.

In der hier gezeigten Darstellung ist der Schaltfinger 62 direkt vor einer Schaltschiene 57 angeordnet, so dass bei einer Schaltbewegung 12 der Schaltwelle 3 ein Gang eingelegt werden kann. Diese Position des Schaltfingers 62 vor der Schaltschiene 57 wird durch die Kulisse 4 eingestellt. Hierzu weist die Kulisse 4 ein zweites Kulissenteil 6 mit Stegen 9 und Nuten 8 auf, wobei das zweite Kulissenteil 6 um die Schaltwelle 3 herum und koaxial zur Schaltwelle 3 angeordnet ist. Hier erstreckt sich ein erstes Kulissenteil 5 mit einem Element 10 so um das zweite Kulissenteil 6 herum, dass das Element 10 von außen in die Nut 8 zwischen Stegen 9 eingreifen kann. Damit wird ermöglicht, dass bei einer Schaltbewegung 12 der Schaltwelle 3 das mit der Schaltwelle 3 fest verbundene zweite Kulissenteil 6 gegenüben dem ersten Kulissenteil 5 in einer Umfangsrichtung 19, 20 verdreht werden kann, so dass das Element 10 im Rahmen einer Schaltbewegung 12 in die Nut 8 eintaucht.

Fig. 5 zeigt die Anordnung gemäß Fig. 4, wobei hier der Schaltfinger 62 so vor zwei benachbarten Schaltschienen 57 angeordnet ist, dass bei einer Schaltbewegung 12 zwei Gänge gleichzeitig eingelegt werden würden. Diese Schaltbewegung 12 wird jedoch durch die Kulisse 4 verhindert, da das Element 10 bei einer Schaltbewegung 12 gegen den Steg 9 trifft.

Fig. 6 zeigt ein zweites Kulissenteil 6 gemäß einer ersten Ausführungsvariante. Das zweite Kulissenteil 6 weist in einer Richtung 7, 22 abwechselnd Nuten 8 und Stege 9 auf. Das zweite Kulissenteil 6 weist an einer Innenumfangsfläche 24 eine erste Profilverzahnung 23 auf. An der ersten Profilverzahnung 23 ist ein Kodierzahn 27 vorgesehen, der nur eine Einbauposition von zweitem Kulissenteil 6 und Schaltwelle 3 (hier nicht dargestellt) zueinander zulässt. Weiter ist eine Markierung 29 an dem zweiten Kulissenteil 6 so angeordnet, dass die Einbauposition 28 des zweiten Kulissenteils 6 gegenüber der Schaltwelle 3 erkennbar ist. Damit wird eine Montage des zweiten Kulissenteils 6 vereinfacht und eine fehlerhafte Anordnung auf der Schaltwelle 3 verhindert. Das zweite Kulissenteil 6 weist zwei einander gegenüberliegende Gassen 21 auf und auf beiden Seite 26 jeder Gasse 21 Nuten 9 und Stege 8. Damit kann eine Schaltbewegung 12 in eine erste Umfangsrichtung 19 und in eine zweite Umfangsrichtung 20 erfolgen.

Es ist hier erkennbar, dass bei dem gezeigten zweiten Kulissenteil 6 eine weitere Gasse 21 gegenüberliegend angeordnet ist. Damit könnte das zweite Kulissenteil 6 (wenn z. B. zwei Kodierzähne 27 vorliegen) auch um 180° gedreht und ggf. auch um 180° gekippt verbaut werden.

Fig. 7 zeigt das Zusammenwirken von zweitem Kulissenteil 6 gemäß Fig. 6 und einem ersten Kulissenteil 5. Das erste Kulissenteil 5 ist gehäusefest gegenüber der bewegbaren Schaltwelle 3 verbaut. Das zweite Kulissenteil 6 ist an der Schaltwelle 3 angeordnet und zusammen mit Schaltwelle 3 für das Wählen von Gängen axial verschiebbar und für das Schalten von Gängen drehbar beweglich. Das erste Kulissenteil 5 weist Elemente 10 auf, von denen jeweils eins mit jeweils einem der Stege 9 zusammenwirken kann und in jeweils eine der Nuten 8 bewegbar ist. Bei einer Wählbewegung 11 sind die Elemente 10 in der Gasse 21 angeorndnet und an den Stegen 8 und Nuten 9 vorbeiführbar. Bei einer Schaltbewegung 12 können die Elemente 10 in eine der Nuten 9 hineinbewegt werden. Die Stege 8 verhindern, dass eine Schaltbewegung 12 dann durchgeführt wird, wenn der Schaltfinger 62 in der Kraftfahrzeuggetriebeeinrichtung 2 nicht korrekt positioniert ist. Dafür muss die Position der Kraftfahrzeuggetriebeeinrichtung 2 gegenüber dem ersten Kulissenteil 5 beziehungsweise gegenüber dem zweiten Kulissenteil 6 und der Schaltwelle 3 genau eingestellt sein.

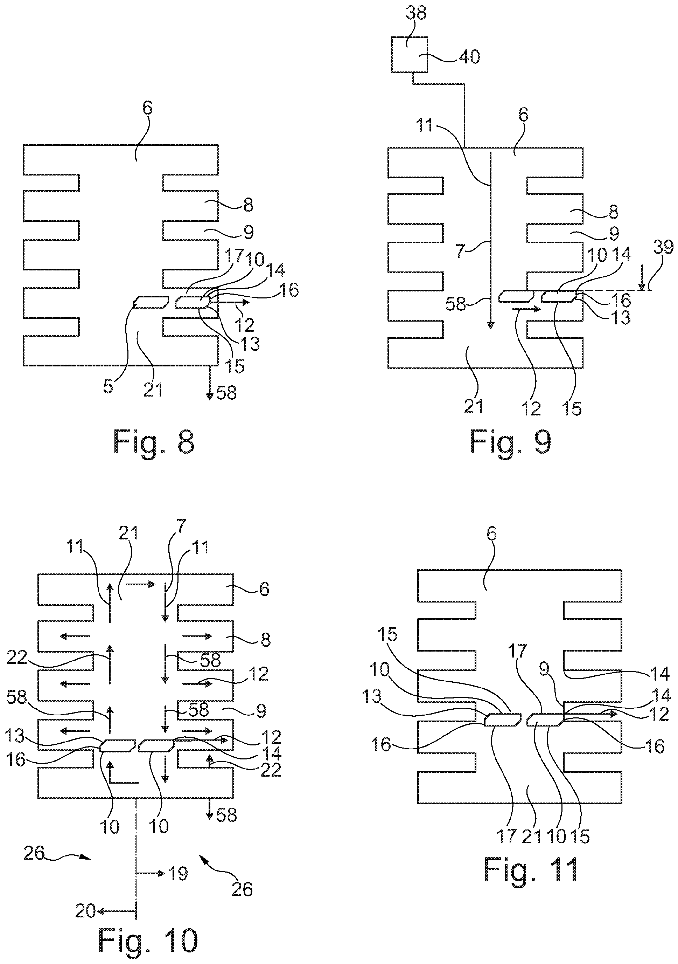

Die Kulisse 4 hat nun die folgenden Funktionen, die in den Fig. 8 - 11 schematisch dargestellt sind. Zum einen verhindert die Kulisse 4 eine Wählbewegung 11, während ein Gang eingelegt ist (siehe z. B. Fig. 9). Weiterhin verhindert die Kulisse 4, dass zwei Gänge gleichzeitig eingelegt werden können (siehe z. B. Fig. 11). Darüber hinaus dient die Kulisse 4 auch als Drehmomentstütze z. B. beim Zurückfahren aus einer Nut 8 in die Gasse 21. Ohne Kulisse 4 wäre auf dem Rückweg nicht definiert, ob der Schaltfinger 62 eine Wählbewegung 11 oder eine Schaltbewegung 12 ausführen soll. Blockaden (beim Anschlag von Elementen 10 an Stege 9) können durch eine Steuerung 38 über Sensoren erfasst werden, so dass eine Ist-Position 39 der Schaltwelle 3 und damit des zweiten Kulissenteils 6 bestimmbar ist. Ausgehend von der ermittelten Ist-Position 39 können Soll-Positionen 40 (Wählbewegung 11, Schaltbewegung 12) genau angefahren werden.

Weiterhin ermöglicht die Kulisse 4, dass größere Fertigungstoleranzen der an der Schaltbewegung beteiligten Elemente, wie z.B. den Schaltfinger zulässig sind, so dass auch größere Fehlstellungen dieser Elemente zueinander kompensiert werden können und so die Anzahl der Fehlversuche bei Schaltvorgängen verringert werden, wobei gleichzeitig eine Verspannung der Verbindungseinrichtung 18 vermieden wird. Es ist nämlich gerade bei dem 1-Motor-Getriebeaktor 1 zu vermeiden, dass eine Bewegung der Schaltwelle 3 hervorgerufen oder erzwungen wird, die in die gesperrte Drehrichtung des Freilaufs 51 wirkt.

Fig. 8 zeigt die Gasse 21 und Nuten 8 und Stege 9 eines zweiten Kulissenteils 6 sowie ein Element 10 eines ersten Kulissenteils 5. Dieses Zusammenwirken von Element 10 und Nuten 8 entspricht dem abstrakten Schaltbild gemäß Fig. 3. Hier befindet sich das Element 10 des ersten Kulissenteils 5 in der Nut 8 des zweiten Kulissenteils 6. Das bedeutet, dass ein Gang durch eine Schaltbewegung 12 des Schaltfingers 62 in der Kraftfahrzeuggetriebeeinrichtung 2 eingelegt ist. Das Element 10 weist eine Stirnwand 16 und eine Einführfase 13 zwischen Stirnwand 16 und erster Wandung 15 auf. Die erste Wandung 15 weist in die festgelegte Richtung 58 einer Wählbewegung 11.

Fig. 9 zeigt die Kulisse 4 in einer anderen Anordnung von erstem Kulissenteil 5 und zweitem Kulissenteil 6 zueinander. Hier kontaktiert das Element 10 den Steg 8 in der Nut 9. Damit kann eine Ist-Position 39 des Stegs 8 und/oder des Elements 10 in Richtung 7, 22 entlang Wählbewegung 11 bestimmt werden. Diese Ist-Position 39 kann mit einer Soll-Position 40 in der Steuerung 38 abgeglichen werden, so dass auch ein Verschleiß des Getriebeaktors 1 bestimmt werden kann. Bei der Wählbewegung 11 wird das zweite Kulissenteil 6 gegenüber dem feststehenden ersten Kulissenteil 5 entlang der festgelegten Richtung 58 bewegt.

Fig. 10 zeigt die vollständige Wählbewegung 11 und Schaltbewegung 12 der Kulisse 4 mit beweglichem zweiten Kulissenteil 6 und feststehendem ersten Kulissenteil 5. Das zweite Kulissenteil 6 ist axial verschiebbar und drehbeweglich gegenüber dem Kulissenteil 5 anordenbar, wobei hier das zweite Kulissenteil 6 entlang einer Richtung 7, 22 abwechselnd Nuten 8 und Stege 9 aufweist. Weiterhin weist das zweite Kulissenteil 6 auf beiden Seiten 26 der Gasse 21 Nuten 9 und Stege 8 auf, so dass ausgehend von einer Wählbewegung 11 in der Gasse 21 in einer festgelegten Richtung 58 eine Schaltbewegung 12 nur in jeweils einer Umfangsrichtung 19, 20 durchgeführt werden kann.

Die Nuten 9 und Stege 8 werden nun entlang der festgelegten Richtung 58 bei der Wählbewegung 11 an dem Element 10 vorbeigeführt, wobei dann bei einer Schaltbewegung 12 das zweite Kulissenteil 6 so in einer Umfangsrichtung 19, 20 gegenüber dem Element 10 verschwenkt wird, dass das Element 10 in eine der Nuten 9 hineinbewegt werden kann. Erfolgt in der gezeigten Position des Elements 10 eine Schaltbewegung 12, so kann das rechte Element 10 über die Einführfase 13 das zweite Kulissenteil 6 weiter entlang der festgelegten Richtung 58 der Wählbewegung 11 verschieben, so dass die Nut 8 getroffen wird und das Element 10 in die Nut 8 hineingeschoben werden kann. Damit ist auch der Schaltfinger 62 richtig positioniert, so dass ggf. Fehlstellungen des Schaltfingers 62 und/oder der Nut 8 kompensiert werden und damit das verfügbare Fenster für das Schalten des Gangs vergrößert wurde. Wird jedoch eine Schaltbewegung 12 in Umfangsrichtung 20 durchgeführt, wirkt das linke Element 10 mit den Nuten 9 und Stegen 8 der anderen Seite 26 der Gasse 21 zusammen.

Fig. 11 zeigt die Darstellung gemäß Fig. 8, wobei hier eine fehlerhafte Schaltbewegung 12 gestoppt wird. In der hier gezeigten Anordnung von erstem Kulissenteil 5 mit Element 10 und zweitem Kulissenteil 6 mit Nuten 9 und Stegen 8 ist eine Schaltbewegung 12 nicht möglich, da die Stirnseite 16 des Elements 10 mit dem Steg 8 kollidiert. Da hier keine Einführfase 13 vorliegt, kann das zweite Kulissenteil 6 nicht entgegen der festgelegten Richtung 58 bewegt werden, so dass eine Schaltbewegung 12 und gleichzeitig ein Verspannen der Verbindungseinrichtung 18 hier verhindert wird.

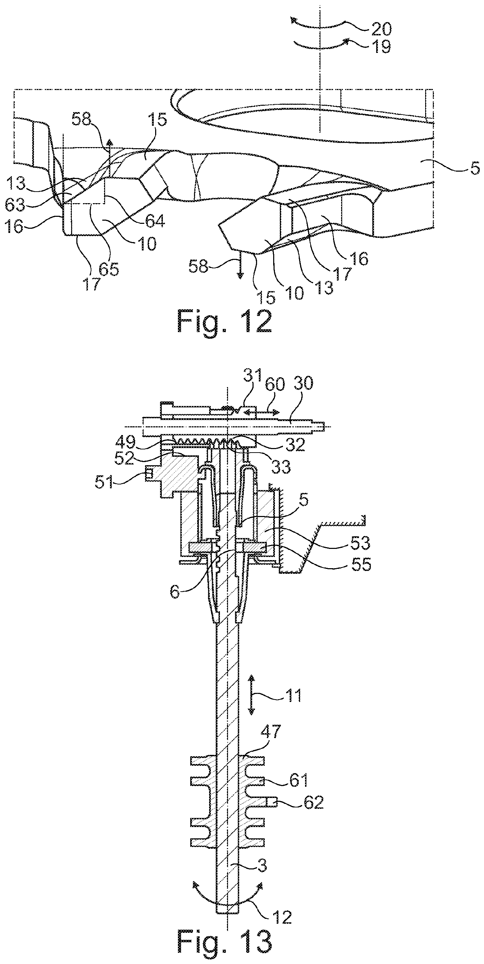

Fig. 12 zeigt ein erstes Kulissenteil 5 mit zwei Elementen 10, die gemeinsam in einer Gasse 21 eines zweiten Kulissenteils 6 (z. B. gemäß den Fig. 4 - 11) anordenbar sind. Die Elemente 10 weisen in der festgelegten Richtung 58 der Wählbewegung 11 jeweils erste Wandungen 16 und in der der festgelegten Richtung 58 entgegen weisenden Richtung zweite Wandungen 17 auf. Zwischen zweiten Wandungen 17 und den Stirnwänden 16 sind jeweils rechtwinklige Übergänge 14 vorgesehen, wobei zwischen den Stirnwänden 16 und der ersten Wandung 15 jeweils Einführfasen 13 vorgesehen sind. Über die Einführphasen 13 kann das zweite Kulissenteil 6 weiter in der festgelegten Richtung 58 der Wählbewegung 11 verschoben werden, aus der jeweils nur in eine Umfangsrichtung 19, 20 eine Schaltbewegung 12 durchgeführt werden kann.

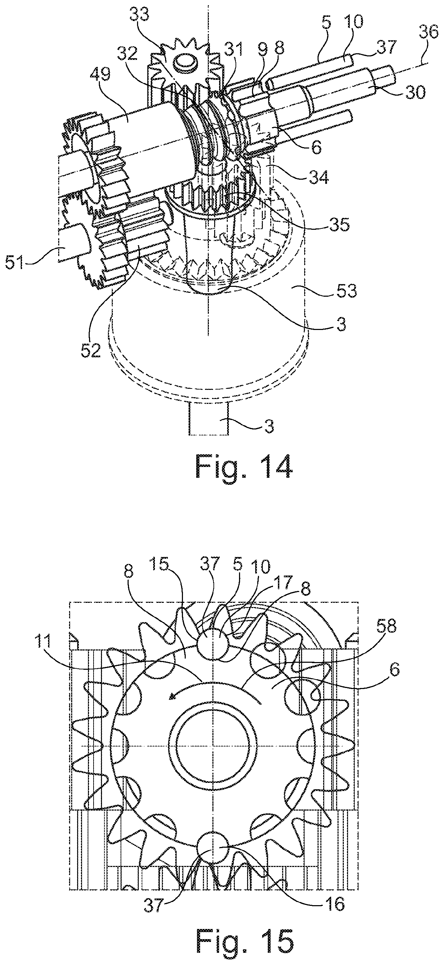

Die Einführfase 13 weist also einen Winkel 63 gegenüber der festgelegten Richtung 58 auf, der geringer als 90 Winkelgrad ist, insbesondere zwischen 50 und 70 Winkelgrad. Dabei weist die Einführfase 13 in Richtung der Schaltbewegung 12 (hier Umfangsrichtung 20) eine Länge 65 auf, so dass das zweite Kulissenteil 6 über die Länge 65 der Einführfase 13 um eine Strecke 64 in der festgelegten Richtung 58 weiterverschiebbar ist. Diese Ausführungen sind entsprechend auf Einführfasen 13 an dem zweiten Kulissenteil 6 übertragbar (oder auf die Kulisse 4 gemäß der zweiten Ausführungsvariante in Fig. 14 und 15).

Fig. 13 zeigt ein 1-Motor-Getriebeaktor in einer Seitenansicht im Schnitt. Wie zu Fig. 1 bereits beschrieben, wird über einen hier nicht gezeigten Motor 41 eine Spindel 30 angetrieben und über die Spindelmutter 31 und ein drittes Zahnrad 49 ein an dem Freilauf 51 angeordnetes Wählrad 52. Das Wählrad 52 ist zur Drehung des Wähltopfs 53 vorgesehen. In dem Wähltopf 53 verlaufen Bahnkurven 54, die mit Führungsstiften 55 so zusammenwirken, dass bei einer Drehung des Wähltopfs 53 die über die Führungsstifte 55 damit wirkverbundene Schaltwelle 3 eine Wählbewegung 11 ausführt.

An der Schaltwelle 3 ist ein Schalthebel 47 mit Schaltfinger 62 und Auswerfernocken 61 angeordnet. Über die Spindel 30 kann die Gewindespindel 31 eine axiale Bewegung 60 durchführen, so dass über die als Zahnstange 32 ausgeführte Spindelmutter 31 die Zahnräder 33, 34 verdreht werden können. Die Zahnräder 33, 34 sind mit dem Wellenrad 35 wirkverbunden, dass drehfest mit der Schaltwelle 3 verbunden ist. Über die axiale Bewegung 60 der Spindelmutter 31 wird also die Schaltbewegung 12 ausgeführt. Das erste Kulissenteil 5 ist hierbei über einen radial in Bezug auf die Schaltwelle 3 außen angeordneten Topf bereitgestellt, während das zweite Kulissenteil 6 Bestandteil der Schaltwelle 3 ist. Insbesondere kann das zweite Kulissenteil 6 auch durch Umformverfahren oder Fräßbearbeitungen der Schaltwelle 3 aus der Schaltwelle 3 selber hergestellt werden.

Fig. 14 ein Detail eines 1-Motor-Getriebeaktors 1 in einer perspektivischen Darstellung mit einer zweiten Ausführungsvariante einer Kulisse 4. Es wird auf die Beschreibung der Fig. 1 verwiesen. Gleiche Bezugszeichen bezeichnen gleiche Gegenstände. Der Getriebeaktor 1 umfasst hier eine Spindel 30 mit einer Spindelmutter 31, wobei die Spindelmutter 31 eine Zahnstange 32 bildet und über jeweils eins von zwei Zahnrädern 33, 34 mit einem Wellenrad 35 wirkverbunden ist, wobei das Wellenrad 35 mit der Schaltwelle 3 fest verbunden ist.

Hier bildet die Spindelmutter 31 das zweite Kulissenteil 6. Nuten 9 und Stege 8 verlaufen parallel zu einer Spindelachse 36 und das Element 10 des ersten Kulissenteils 5 ist durch mindestens einen Stift 37 (hier durch zwei Stifte, die parallel zueinander und auf gegenüberliegenden Seiten der Spindelachse 36 angeordnet sind) gebildet.

Fig. 15 zeigt ein Detail des 1-Motor-Getriebeaktors gemäß Fig. 14 in einer Ansicht entlang der Spindelachse 36. Bei einer Wählbewegung 11 wird das zweite Kulissenteil 6 gegenüber den feststehenden Stiften 37 des ersten Kulissenteils 4 in der festgelegten Richtung 58 gedreht. Bei einer Schaltbewegung 12 führt die Spindelmutter eine axiale Bewegung 60 entlang der Spindelachse 36 aus. Die Stifte 37 greifen bei passender Positionierung in die Nuten 9 des zweiten Kulissenteils 6 ein und ermöglichen so die Schaltbewegung 12. Auch hier ermöglicht eine Einführfase 13 im Übergang 14 von Stirnseite 16 zu erster Wandung 15 eine Verschiebung des zweiten Kulissenteils 6 in der festgelegten Richtung 58 bei einer Kollision von Stift 37 und Steg 8.Eine Verschiebung in der entgegengesetzten Richtung wird durch den rechtwinkligen Übergang 14 zwischen Stirnseite 16 und zweiter Wandung 15 verhindert.

Unabhängig vom oben beschriebenen Aufbau ist es selbstverständlich möglich das Wirkprinzip der beschriebenen Getriebeaktoren umzukehren. Für den Fachmann ist es dabei leicht möglich eine Kulissenschiene ortsfest anzubringen, welche der oben beschriebenen Kulisse 4 entspricht dabei aber im Wesentlichen komplementär zu dieser Kulisse 4, d.h. unter anderem innen hohl aufgebaut ist. Diese Kulissenschiene wäre dann gehäusefest und würde Nuten 8 für an der Schaltwelle 3 rotationsfest angeordnete Elemente 10 bereitstellen. Das erste Kulissenteil wäre dann entsprechend komplementär zum ersten Kulissenteil 6 aufgebaut und mit der Schaltwelle 3 verbunden.

### Bezugszeichenliste

- 1: Getriebeaktor
- 2: Kraftfahrzeug-Getriebeeinrichtung
- 3: Schaltwelle
- 4: Kulisse
- 5: erstes Kulissenteil
- 6: zweites Kulissenteil
- 7: erste Richtung
- 8: Nut
- 9: Steg
- 10: Element
- 11: Wählbewegung
- 12: Schaltbewegung
- 13: Einführfase
- 14: Übergang
- 15: erste Wandung
- 16: Stirnseite
- 17: zweite Wandung
- 18: Verbindungseinrichtung
- 19: erste Umfangsrichtung
- 20: zweite Umfangsrichtung
- 21: Gasse
- 22: zweite Richtung
- 23: erste Profilverzahnung
- 24: Innenumfangsfläche
- 25: Nut
- 26: Seite
- 27: Kodierzahn
- 28: Einbauposition
- 29: Markierung
- 30: Spindel
- 31: Spindelmutter
- 32: Zahnstange
- 33: erstes Zahnrad
- 34: zweites Zahnrad
- 35: Wellenrad
- 36: Spindelachse
- 37: Stift
- 38: Steuerung
- 39: Ist-Position
- 40: Soll-Position
- 41: Motor
- 42: Stirnradverzahnung
- 43: Motorspindel
- 44: erste Drehrichtung
- 45: zweite Drehrichtung
- 46: Hohlradinnenverzahnung
- 47: Schalthebel
- 48: Rastierung
- 49: drittes Zahnrad
- 50: erster axialer Stellungsbereich
- 51: Freilauf
- 52: Wählrad
- 53: Wähltopf
- 54: Bahnkurve
- 55: Führungsstift
- 56: Verzahnung
- 57: Schaltschiene
- 58: festgelegte Richtung
- 59: Außenumfangsfläche
- 60: axiale Bewegung
- 61: Auswerfernocken
- 62: Schaltfinger
- 63: Winkel
- 64: Strecke
- 65: Länge

## Patentansprüche

1. Getriebeaktor (1) für eine Kraftfahrzeug-Getriebeeinrichtung (2), die für die Bildung von Gängen mehrere Übersetzungsstufen aufweist, wobei der Getriebeaktor (1) eine Schaltwelle (3) aufweist, die für das Schalten von Gängen drehbeweglich gelagert ist und für das Wählen von Gängen axial verschiebbar gelagert ist, und wobei der Getriebeaktor (1) eine Kulisse (4) aufweist mit einem fest angeordnetem ersten Kulissenteil (5) und einem axial verschiebbaren und drehbeweglichem zweitem Kulissenteil (6), wobei das eine Kulissenteil (5, 6) entlang einer Richtung (7, 22) abwechselnd Nuten (8) und Stege (9) aufweist und das andere Kulissenteil (6, 5) wenigstens ein Element (10) aufweist, das mit jeweils einem der Stege (9) zusammenwirken kann und in jeweils eine der Nuten (8) bewegbar ist; wobei das wenigstens eine Element (10) bei einer Wählbewegung (11) in einer festgelegten Richtung (58) an den Stegen (8) und Nuten (9) vorbeigeführt wird und bei einer Schaltbewegung (12) in eine der Nuten (9) hineinbewegt wird;
wobei zumindest an den Stegen (8) oder an dem Element (10) eine Einführfase (13) vorgesehen ist, und wobei im Übrigen im Wesentlichen rechtwinklige Übergänge (14) vorgesehen sind, **dadurch gekennzeichnet, dass** das Element (10) eine in die festgelegte Richtung (58) weisende erste Wandung (15) und eine hin zu der Nut (9) weisende Stirnseite (16) aufweist, wobei zwischen Stirnseite (16) und erster Wandung (15) die Einführfase (13) vorliegt, und wobei das Element (10) eine der festgelegten Richtung (58) entgegen weisende zweite Wandung (17) aufweist, wobei zwischen der Stirnseite (16) und der zweiten Wandung (17) ein im Wesentlichen rechtwinkliger Übergang (14) vorliegt, so dass das zweite Kulissenteil (6) bei einer Kollision zwischen Element (10) und Steg (8) während der Schaltbewegung (12) über die Einführfase (13) in der festgelegten Richtung (58) der Wählbewegung (11) weiterbewegbar und die Schaltbewegung (12) fortsetzbar ist, und dann bei einer Kollision zwischen Element (10) und Steg (8) während der Schaltbewegung (12) das zweite Kulissenteil (6) nicht entgegen der festgelegten Richtung (58) der Wählbewegung (11) bewegbar ist, sondern die Schaltbewegung (12) gestoppt ist.

2. Getriebeaktor (1) nach Anspruch 1, wobei das zweite Kulissenteil (6) die Nuten (9) und Stege (8) aufweist.

3. Getriebeaktor (1) nach einem der vorhergehenden Ansprüche, wobei das zweite Kulissenteil (6) an der Schaltwelle (3) fest angeordnet und mit der Schaltwelle (3) gegenüber dem fest angeordneten ersten Kulissenteil (5) bewegbar ist.

4. Getriebeaktor (1) nach Anspruch 3, wobei das zweite Kulissenteil (6) die Nuten (9) und Stege (8) aufweist und koaxial zu der Schaltwelle (3) angeordnet ist und sich um die Schaltwelle (3) herum erstreckt, wobei sich die Nuten (9) und Stege (8) in einer Umfangsrichtung (19, 20) erstrecken und das zweite Kulissenteil (6) weiter mindestens eine Gasse (21) aufweist, in der das wenigstens eine Element (10) während der Wählbewegung (11) bewegbar ist.

5. Getriebeaktor (1) nach Anspruch 4, wobei das zweite Kulissenteil (6) auf beiden Seiten (26) der mindestens einen Gasse (21) Nuten (9) und Stege (8) aufweist und die Schaltbewegung (12) bei einer Wählbewegung (11) in der ersten Richtung (7) nur in eine erste Umfangsrichtung (19) erfolgt und bei einer Wählbewegung (11) in einer der ersten Richtung (7) entgegengesetzten zweiten Richtung (22) nur in eine zweite Umfangsrichtung (20) erfolgt, wobei das wenigstens eine Element (10) entsprechend zwei Stirnseiten (16) aufweist.

6. Getriebeaktor (1) nach einem der Ansprüche 3 bis 5, wobei das zweite Kulissenteil (6) über eine erste Profilverzahnung (23) an einer Innenumfangsfläche (24) an einer zweiten Profilverzahnung (25) an einer Außenumfangsfläche (26) der Schaltwelle (3) drehfest anordenbar ist, wobei an beiden Profilverzahnungen (23, 25) jeweils ein Kodierzahn (27) vorliegt, der nur eine Einbauposition (28) von zweitem Kulissenteil (6) und Schaltwelle (3) zueinander zulässt.

7. Getriebeaktor (1) nach Anspruch 6, wobei eine Markierung (29) an dem zweitem Kulissenteil (6) angeordnet ist, so dass die Einbauposition (28) erkennbar ist.

8. Getriebeaktor (1) nach einem der Ansprüche 4 bis 7, wobei das erste Kulissenteil (5) ringförmig ausgeführt ist und koaxial zu der Schaltwelle (3) angeordnet ist und sich um die Schaltwelle (3) und um das zweite Kulissenteil (6) herum erstreckt.

9. Getriebeaktor (1) nach einem der Ansprüche 4 bis 8, wobei das erste Kulissenteil (5) zwei einander gegenüberliegende Elemente (10) aufweist und das zweite Kulissenteil (6) zwei einander gegenüberliegende Gassen (21).

10. Getriebeaktor (1) nach einem der Ansprüche 1 oder 2, wobei der Getriebeaktor (1) eine Spindel (30) mit einer Spindelmutter (31) umfasst, wobei die Spindelmutter (31) eine Zahnstange (32) bildet und über jeweils eins von zwei Zahnrädern (33, 34) mit einem Wellenrad (35) wirkverbunden ist, wobei das Wellenrad (35) mit der Schaltwelle (3) fest verbunden ist, wobei die Spindelmutter (31) das zweite Kulissenteil (6) bildet und Nuten (9) und Stege (8) parallel zu einer Spindelachse (36) verlaufen und das Element (10) des ersten Kulissenteils (5) durch mindestens einen Stift (37) gebildet ist.

11. Getriebeaktor (1) nach Anspruch 10, wobei das erste Kulissenteil (5) zwei Stifte (37) aufweist, die parallel zueinander und auf gegenüberliegenden Seiten der Spindelachse (36) angeordnet sind.

12. Verfahren zum Wählen und Schalten von Gängen mit einem Getriebeaktor (1) gemäß einem der vorhergehenden Ansprüche, wobei eine Steuerung (38) vorgesehen ist und das Verfahren die folgenden Schritte umfasst:
a. Durchführen einer Schaltbewegung (12) und Anordnen des mindestens einen Elements (10) in einer Nut (9);
b. Durchführen einer Wählbewegung (11), so dass Element (10) und Steg (8) einander kontaktieren;
c. Bestimmen einer Ist-Position (39) des Stegs (8) und/oder des Elements (10) in Richtung (7, 22) der Wählbewegung (11);
**d.** Abgleich einer Soll- Position (40) und der Ist-Position (39) in der Steuerung (38) und Bestimmung eines Verschleiß des Getriebeaktors (1).

## Claims

1. A transmission actuator (1) for a motor vehicle transmission device (2) having a plurality of transmission ratios for forming gears, wherein the transmission actuator (1) has a shifting shaft (3) which is mounted in a rotatable manner for shifting gears and is mounted in an axially displaceable manner for selecting gears, and wherein the transmission actuator (1) has a gate (4) comprising a first gate part (5) which is arranged in a fixed manner and a second gate part (6) which is rotatable and axially displaceable, wherein one gate part (5, 6) has grooves (8) and lands (9) alternating in one direction (7, 22) and the other gate part (6, 5) has at least one element (10) that can cooperate with one land (9) at a time and can be moved into one groove (8) at a time; wherein the at least one element (10) is moved past the lands (8) and grooves (9) during a selection movement (11) in a defined direction (58) and is moved into one of the grooves (9) during a shifting movement (12);
wherein a lead-in bevel (13) is provided at least on the lands (8) or on the element (10), and wherein substantially right-angled transitions (14) are also provided, **characterised in that** the element (10) has a first wall (15) facing in the defined direction (58) and an end face (16) facing towards the groove (9), wherein the lead-in bevel (13) is present between the end face (16) and the first wall (15), and wherein the element (10) has a second wall (17) facing in the defined direction (58), wherein an essentially right-angled transition (14) is present between the end face (16) and the second wall (17), so that, in the event of a collision between element (10) and land (8) during the shifting movement (12), the second gate part (6) can be moved further in the defined direction (58) of the selection movement (11) via the lead-in chamfer (13) and the shifting movement (12) can be continued, and then in the event of a collision between element (10) and land (8) during the shifting movement (12), the second gate part (6) cannot be moved counter to the defined direction (58) of the selection movement (11), but rather the shifting movement (12) is stopped.

2. The transmission actuator (1) according to claim 1, wherein the second gate part (6) has the grooves (9) and lands (8).

3. The transmission actuator (1) according to any one of the preceding claims, wherein the second gate part (6) is arranged in a fixed manner on the shifting shaft (3) and is movable with the shifting shaft (3) relative to the fixedly arranged first gate part (5).

4. The transmission actuator (1) according to claim 3, wherein the second gate part (6) has the grooves (9) and lands (8) and is arranged coaxially to the shifting shaft (3) and extends around the shifting shaft (3), wherein the grooves (9) and lands (8) extend in a circumferential direction (19, 20) and the second gate part (6) further comprises at least one path (21) in which the at least one element (10) can be moved during the selection movement (11).

5. The transmission actuator (1) according to claim 4, wherein the second gate part (6) of the at least one path (21) has grooves (9) and lands (8) on both sides (26), and the shifting movement (12), during a selection movement (11) in the first direction (7), takes place only in a first circumferential direction (19), and during a selection movement (11) in a second direction (22) opposite the first direction (7), takes place only in a second circumferential direction (20), wherein the at least one element (10) correspondingly has two end faces (16).

6. The transmission actuator (1) according to any one of claims 3 to 5, wherein the second gate part (6) can be arranged in a rotationally fixed manner, via a first profile toothing (23), on an inner peripheral surface (24) on a second profile toothing (25) on an outer peripheral surface (26) of the shifting shaft (3), wherein a coding tooth (27) is present on each of the two profile toothings (23, 25), which only allows one installation position (28) of the second gate part (6) and the shifting shaft (3) relative to one another.

7. The transmission actuator (1) according to claim 6, wherein a marking (29) is arranged on the second gate part (6) so that the installation position (28) can be identified.

8. The transmission actuator (1) according to any one of claims 4 to 7, wherein the first gate part (5) is annular and is arranged coaxially to the shifting shaft (3) and extends around the shifting shaft (3) and around the second gate part (6).

9. The transmission actuator (1) according to any one of claims 4 to 8, wherein the gate part (5) has two mutually opposite elements (10) and the second gate part (6) has two mutually opposite paths (21).

10. The transmission actuator (1) according to any one of claims 1 or 2, wherein the transmission actuator (1) comprises a spindle (30) with a spindle nut (31), wherein the spindle nut (31) forms a toothed rack (32) and is operatively connected via one of two gears (33, 34) to a shaft wheel (35), the shaft wheel (35) being fixedly connected to the shifting shaft (3), wherein the spindle nut (31) forms the second gate part (6) and grooves (9) and lands (8) run parallel to a spindle axis (36), and the element (10) of the first gate part (5) is formed by at least one pin (37).

11. The transmission actuator (1) according to claim 10, wherein the first gate part (5) has two pins (37) which are arranged parallel to one another and on opposite sides of the spindle axis (36).

12. A method for selecting and shifting gears using a transmission actuator (1) according to any one of the preceding claims, wherein a controller (38) is provided and the method comprises the following steps:
a performing a shifting movement (12) and arranging the at least one element (10) in a groove (9);
b performing a selection movement (11) so that element (10) and land (8) contact each other;
c determining an actual position (39) of the land (8) and/or of the element (10) in the direction (7, 22) of the selection movement (11);
d comparing a target position (40) with the actual position (39) in the controller (38) and determining a wear of the transmission actuator (1).

## Revendications

1. Actionneur de boîte de vitesses (1) pour un mécanisme de boîte de vitesses de véhicule automobile (2) qui a une pluralité de étages de transmission pour la formation de rapports, l'actionneur de boîte de vitesses (1) ayant un arbre de commande (3) lequel est monté en rotation pour le changement de rapports et de manière à pouvoir être déplacé axialement pour la sélection de rapports, et l'actionneur de boîte de vitesses (1) présentant une coulisse (4) avec une première partie de coulisse (5) fixe et une seconde partie de coulisse (6) déplaçable axialement et rotative, l'une des parties de coulisse (5, 6) présentant des rainures (8) et des nervures (9) en alternance dans une direction (7, 22) et l'autre partie de coulisse (6, 5) présentant au moins un élément (10) qui peut coopérer avec l'une des nervures (9) respective et se déplacer dans une des rainures (8) respective ; l'au moins un élément (10), lors de son mouvement de sélection (11) passant à côté des nervures (8) et des rainures (9) dans un sens déterminé (58) et, lors de son mouvement de changement de rapports (12), étant déplacé dans l'une des rainures (9) ;
un chanfrein d'insertion (13) étant ménagé au moins sur les nervures (8) ou sur l'élément (10), et en outre, des passages essentiellement à angle droit (14) étant ménagés, **caractérisé en ce que** l'élément (10) présente une première paroi (15) tournée dans le sens déterminé (58) et une face frontale (16) tournée vers la rainure (9), le chanfrein d'insertion (13) se trouvant entre la face frontale (16) et la première paroi (15), et l'élément (10) présentant une seconde paroi (17) tournée dans le sens opposé au sens déterminé (58), un passage essentiellement à angle droit (14) étant ménagé entre la face frontale (16) et la seconde paroi (17), de sorte que la seconde partie de coulisse (6), en cas de collision entre l'élément (10) et la nervure (8) lors du mouvement de changement de rapports (12) puisse continue à se déplacer par le chanfrein d'insertion (13) dans le sens déterminé (58) du mouvement de sélection (11) et que le mouvement de changement de rapports (12) puisse se poursuivre et, puis que, en cas de collision entre l'élément (10) et la nervure (8) lors du mouvement de changement de rapports (12), la seconde partie de coulisse (6) ne puisse pas se déplacer dans le sens opposé au sens déterminé (58) du mouvement de sélection (11), mais que le mouvement de changement de rapports (12) est interrompu.

2. Actionneur de boîte de vitesses (1) selon la revendication 1, la seconde partie de coulisse (6) présentant les rainures (9) et les nervures (8).

3. Actionneur de boîte de vitesses (1) selon l'une des revendications précédentes, la seconde partie de coulisse (6) étant fixe sur l'arbre de commande (3) et pouvant se déplacer avec l'arbre de commande (3) par rapport à la première partie de coulisse (5) fixe.

4. Actionneur de boîte de vitesses (1) selon la revendication 3, la seconde partie de coulisse (6) présentant les rainures (9) et les nervures (8) et étant disposée coaxialement à l'arbre de commande (3) et s'étendant autour de l'arbre de commande (3), les rainures (9) et les nervures (8) s'étendant dans un sens circonférentiel (19, 20) et la seconde partie de coulisse (6) présentant en outre au moins une voie (21) dans laquelle au moins un élément (10) peut se déplacer lors du mouvement de sélection (11).

5. Actionneur de boîte de vitesses (1) selon la revendication 4, la seconde partie de coulisse (6) présentant de chaque côté (26) de l'au moins une voie (21) des rainures (9) et des nervures (8) et le mouvement de changement de rapports (12) s'opère, lors d'un mouvement de sélection (11) dans le premier sens (7), uniquement dans un premier sens circonférentiel (19) et, lors d'un mouvement de sélection (11) dans un second sens (22) opposé au premier (7), uniquement dans un second sens circonférentiel (20), l'au moins un élément (10) présentant de manière correspondante deux faces frontales (16).

6. Actionneur de boîte de vitesses (1) selon l'une des revendications 3 à 5, la seconde partie de coulisse (6) pouvant être montée solidaire en rotation sur une seconde denture profilée (25) sur une surface périphérique extérieure (26) de l'arbre de sélection (3) par l'intermédiaire d'une première denture profilée (23) sur une surface périphérique intérieure (24), une dent de codage (27) étant présente sur chacune des deux dentures profilées (23, 25), ladite dent de codage ne permettant qu'une seule position de pose (28) de la seconde partie de coulisse (6) par rapport à l'arbre de commande (3).

7. Actionneur de boîte de vitesses (1) selon la revendication 6, un repère (29) étant placé sur la seconde partie de coulisse (6) permettant de reconnaître la position de pose (28).

8. Actionneur de boîte de vitesses (1) selon l'une des revendications 4 à 7, la première partie de coulisse (5) étant annulaire et disposée coaxialement à l'arbre de commande (3) et s'étendant autour de l'arbre de commande (3) et autour de la seconde partie de coulisse (6).

9. Actionneur de boîte de vitesses (1) selon l'une des revendications 4 à 8, la première partie de coulisse (5) présentant deux éléments opposés (10) et la seconde partie de coulisse (6) deux voies opposées (21).

10. Actionneur de boîte de vitesses (1) selon l'une des revendications 1 ou 2, l'actionneur de boîte de vitesses (1) comprenant une broche (30) avec un écrou de broche (31), l'écrou de broche (31) formant une crémaillère (32) et étant amené à coopérer par l'une des deux roues d'engrenage (33, 34) avec un volant (35), ledit volant (35) étant relié à demeure à l'arbre de commande (3), l'écrou de broche (31) formant la seconde partie de coulisse (6) et les rainures (9) et les nervures (8) étant parallèles à un axe (36) de la broche et l'élément (10) de la première partie de coulisse (5) étant formé par au moins une broche (37).

11. Actionneur de boîte de vitesses (1) selon la revendication 10, la première partie de coulisse (5) présentant deux tiges (37) lesquelles sont parallèles et disposées sur des côtés opposés de l'axe de broche (36).

12. Procédé de sélection et de changement de rapports au moyen d'un actionneur de boîte de vitesses (1) selon l'une des revendications précédentes, une direction (38) étant prévue et le procédé comprenant les étapes suivantes :
a exécution d'un mouvement de changement de rapports (12) et mise en place de l'au moins un élément (10) dans une rainure (9) ;
b exécution d'un mouvement de sélection (11) de sorte que l'élément (10) et la nervure (8) entrent en contact ;
c détermination d'une position réelle (39) de la nervure (8) et/ou de l'élément (10) dans le sens (7, 22) du mouvement de sélection (11) ;
d comparaison d'une position consigne (40) et de la position réelle (39) dans la direction (38) et détermination de l'usure de l'actionneur de l'actionneur de boîtes de vitesses (1).
